# EUROPÄISCHE PATENTSCHRIFT

(11) **EP 0 723 384 B1**
(45) Veröffentlichungstag und Bekanntmachung des Hinweises auf die Patenterteilung: **18.04.2001**
(21) Anmeldenummer: 96100510.5
(22) Anmeldetag: 16.01.1996
(51) Int. Cl.: H05B 37/03, H02J 9/06, H02J 13/00, H02J 7/00

(54) **Schaltungsanordnung zum programmgesteuerten Überwachen und/oder Steuern einer Sicherheitsbeleuchtungsanlage**
Circuit for a program controlled monitoring and/or controlling of a safety-lightening unit
Circuit de garde commandé par programme et/ou de commande d'une installation d'éclairage de sécurité

(30) Priorität: 20.01.1995 DE 19501582
(43) Veröffentlichungstag der Anmeldung: 24.07.1996
(73) Patentinhaber: AEG SVS Power Supply Systems Sörnewitz GmbH, 01640 Coswig (DE)
(72) Erfinder: Zeise, Wolfram, Dipl.-Ing., D-01157 Dresden (DE)
(74) Vertreter: Fritz, Edmund Lothar, Dipl.-Chem.

(56) Entgegenhaltungen:
- EP-A- 0 191 579
- EP-A- 0 205 014
- DE-A- 3 618 790
- DE-A- 4 134 298
- DE-A- 4 430 441

## Beschreibung

Die Erfindung betrifft eine Schaltungsanordnung zum programmgesteuerten Überwachen und/oder Steuern einer Sicherheitsbeleuchtungsanlage mit einer einen Mikroprozessor enthaltenden Überwachungseinheit und mit einer bei einer Netzstörung die Spannungsversorgung für die Leuchten der Sicherheitsbeleuchtungsanlage übernehmenden Batterie.

Eine derartige Schaltungsanordnung ist aus der DE-A-4 134 298 bekannt. Die bekannte Schaltungsanordnung weist eine Überwachungseinrichtung mit einer daran angeschlossenen Unterstation auf. Die Überwachungseinrichtung enthält für die Realisierung der Steuerungs- und Überwachungsfunktionen der Sicherheitsbeleuchtungsanlage einen anwendungsspezifischen Schaltkreis und zusätzlich einen Mikroprozessor. Im wesentlichen sind die Arbeitsmöglichkeiten der Steuerung festgelegt und können nachträglich nur in engen Grenzen durch ein Programm gestaltet werden. Möglichkeiten eines Ausbaus des System, beispielsweise durch zusätzliche Leuchten, werden nicht angesprochen.

Aus der DE-A-4 318 364 ist ebenfalls eine Schaltungsanordnung zur Überwachung einer Sicherheitsbeleuchtungsanlage bekannt. Jede Leuchte ist an einer Peripheriebaugruppe angeschlossen, die Impulse senden und empfangen kann. Die Peripheriebaugruppen sind wiederum mit Sende- und Empfangseinrichtungen verbunden, die von einem Mikroprozessor Signale empfangen können. Eine Verbindung aller vorgenannten Baugruppen für einen Datenaustausch ist nicht erwähnt.

Sicherheitsbeleuchtungsanlagen gewähren eine (zumindest vorübergehende) Notbeleuchtung aus einer Batterie, wenn das Stromnetz gestört ist. Sie dienen dem Schutz menschlichen Lebens auf Rettungswegen und sind nach der Norm DIN VDE 0108 beispielsweise vorgeschrieben in Arbeitsräumen mit besonderer Gefährdung, in Ausstellungsräumen, Geschäftshäusern, Gasstätten und Hotels, in Großgaragen, Schulen und in Hochhäusern.

Die Leuchten der Sicherheitsbeleuchtungsanlage lassen sich sowohl in Dauerschaltung - d. h. die Leuchten werden bei ungestörtem Netz über einen Dauerlichttransformator oder direkt über das Netz gespeist - als auch in Bereitschaftsschaltung betreiben.

In dem Aufsatz
Scharf, Achim: Kommunikation über Klingeldrähte und
Stromleitungen im Haus; VDI-Nachrichten, 16.04.1993 wird der grundlegende Aufbau eines Local Operating Networks (LON) beschrieben. Ein LON setzt sich aus verschiedenen, mit Mikroprozessoren ausgerüsteten Baugruppen, den Netzknoten, zusammen. Die Netzknoten können untereinander über ein gemeinsames Bussystem - beispielsweise realisiert durch Zweidrahtleitungen, Koaxialkabel oder durch das bestehende Stromnetz - Daten austauschen. Es lassen sich mehr als 30 000 Netzknoten miteinander über das Bussystem verbinden, ohne daß ein zentraler Server für das Gesamtnetz notwendig wäre. Die im LON realisierten Netzknoten übertragen Statusinformationen und Kommandos über das Netz. Jeder Netzknoten kann auf diese Informationen zugreifen und dadurch weitere Aktionen steuern.

Jeder Netzknoten ist mit einem Neuron-Chip ausgerüstet, der die Kommunikationsabwicklung und Datenspeicherung sichert und Ein-/Ausgabekanäle bereitstellt. Die Programmierung der Software für das LON läßt sich mit einem Personal Computer durchführen. Dieser ist über eine mit einem Neuron-Chip ausgerüstete Baugruppe an das Bussystem - und damit auch an das Netz - angeschlossen und bildet so einen eigenen Netzknoten. Als Beispiele für Nutzungen eines LONs im Wohnbereich sind die Temperaturüberwachung zur gezielten Einschaltung eines Ventilators im Sommer, die Steuerung einer Gegensprechanlage und eines Aufzugs in einem mehrstöckigen Haus und ferner Nutzungen bei Heiz- und Lüftungssystemen, Klimaanlagen, ferngesteuerten Dimmern für die zentrale Verstellung der Beleuchtung sowie bei Sicherheits- und Alarmsystemen genannt.

Aus dem US-Patent US-A-4 945 280 ist eine Schaltungsanordnung für die Steuerung und Überwachung einer Sicherheitsbeleuchtungsanlage bekannt. Die Schaltungsanordnung umfaßt eine zentrale Kontrolleinheit, die über ein Bussystem mit verschiedenen Untereinheiten verbunden ist. Diese Untereinheiten sind beispielsweise Leuchtenanschlußpunkte für die Notlichtversorgung. Weiterhin ist eine dieser Untereinheiten eine Kontrolleinheit für eine Batterie, die im Normalbetrieb geladen werden kann und die im Notlichtbetrieb die Dauer- bzw. Bereitschaftslichtleuchten der Sicherheitsbeleuchtungsanlage mit Strom versorgen kann. Die Steuer- und Überwachungsfunktionen der in diesem US-Patent beschriebenen Schaltungsanordnung werden von der zentralen Kontrolleinheit ausgeübt.

Der Erfindung liegt die Aufgabe zugrunde, eine Schaltungsanordnung zum Überwachen und Steuern einer Sicherheitsbeleuchtungsanlage zu schaffen, die einfach und kostengünstig zur Anpassung an nachträgliche Anforderungen beliebig nachrüstbar ist.

Diese Aufgabe wird erfindungsgemäß dadurch gelöst, daß die Schaltungsanordnung ein intelligentes Netz umfaßt, über das die Überwachung und Steuerung dezentral vorgenommen werden kann, daß die Überwachungseinheit mindestens zwei jeweils mindestens einen Mikroprozessor enthaltende elektronische Baugruppen als Netzknoten dieses Netzes enthält, daß dieses Netz durch weitere, jeweils einen Mikroprozessor enthaltende Netzknoten beliebig erweiterbar ist, ohne daß für die Erweiterung eine schaltungstechnische Anpassung der Netzknoten des bestehenden Netzes erforderlich ist, und daß alle Netzknoten für einen Datenaustausch miteinander gekoppelt sind.

Die Netzknoten sind durch jeweils eine - mit mindestens einem Mikroprozessor ausgerüstete - Baugruppe realisiert.
Als ein derartiges Netz ist beispielsweise das weiter oben erwähnte Local Operating Network (LON) geeignet. Alle Netzknoten sind für einen Datenaustausch miteinander verbunden, beispielsweise durch eine Bussystem-Leitung. Jede Baugruppe muß einen Chip mit einem Mikroprozessor enthalten, damit ein Datenaustausch zwischen den möglicherweise unterschiedlich aufgebauten Baugruppen möglich ist. Bereits auf dem Markt befindliche elektronische Geräte, beispielsweise Drucker oder Personal Computer, lassen sich über den erwähnten, entsprechend angepaßten Chip in das Netz einfügen, so daß auf diese Weise unterschiedlich aufgebaute Netzknoten geschaffen werden.

Die Baugruppen lassen sich bei einem derartigen Netz besonders platzsparend ausführen. Durch den modularen Aufbau kann die Sicherheitsbeleuchtungsanlage nach und nach gemäß den (wachsenden) Anforderungen des Nutzers einfach und kostengünstig ausgebaut werden. Im Falle eines LONs ist eine besonders hohe Kommunikationssicherheit gegeben, da die Steuer- und Überwachungsaufgaben sehr nahe an der gewünschten Stelle verwirklicht werden können. Die Störanfälligkeit ist sehr gering, da jeder Netzknoten autark arbeitet und daher auch bei Störungen der Verbindung (für den Datenaustausch) zwischen den Netzknoten funktioniert. Der modulare Aufbau der Schaltungsanordnung bietet den Vorteil, daß sich Sicherheitsbeleuchtungsanlagen zur Kosteneinsparung nur mit den unbedingt erforderlichen Funktionen ausrüsten lassen. Das LON besitzt keine Kapazitätsgrenze. Ein zusätzlicher Zentralrechner, der (als Server) das Netz verwalten müßte, ist nicht erforderlich.

Bisherige Mikroprozessorsteuerungen benötigen eine Leitung für das Bussystem, das den Datenaustausch zwischen den Netzknoten gewährleistet. Mittels eines LONs lassen sich weitere Übertragungswege für die Daten nutzen, beispielsweise das bestehende Niederspannungsnetz in Gebäuden. In einem solchen Fall kann eine eigene Leitung für ein Bussystem entfallen. Möglich ist außerdem ein Datenaustausch zwischen den Netzknoten durch Infrarot- oder Funksignale.
Es können mehrere Sicherheitsbeleuchtungsanlagen ohne zusätzlichen gerätetechnischen Aufwand miteinander vernetzt werden, beispielweise Zentralbatterieanlagen mit Gruppenbatterieanlagen und Einzelbatterieleuchten. An jeder Stelle dieses Gesamtnetzes lassen sich (unter Zwischenschaltung des erwähnten Chips) Drucker, Personal Computer (als eine Ein- und Ausgabeeinheit) und eine Servicestation anschließen. Infolgedessen kann eine derartige vernetzte Anlage mit lediglich einem Drucker oder einem Personal Computer auskommen. Der Computer kann an einer beliebigen Stelle in das Netz integriert und folglich überall innerhalb des betreffenden, mit der Sicherheitsbeleuchtungsanlage ausgerüsteten Gebäudekomplexes aufgestellt werden. Die Sicherheitsbeleuchtungsanlage kann eine Zentralbatterieanlage, eine Gruppenbatterieanlage oder ein System von Einzelbatterieleuchten sein. Der Unterschied der beiden vorgenannten Anlagen liegt in der Anzahl der angeschlossenen Leuchten für die Sicherheitsbeleuchtung.
Für eine Eingabe- oder eine Ausgabeeinheit für die Sicherheitsbeleuchtungsanlage kann ein eigener Netzknoten vorhanden sein.

Wenn ein Netzknoten einen Drucker enthält, ist es möglich, daß Ergebnisse der Überprüfungen als Protokoll gespeichert werden, so daß eine ordnungsgemäße Dokumentation von (vorgeschriebenen) Kontrollen der Sicherheitsbeleuchtungsanlage (für den Fall rechtlicher Auseinandersetzungen) möglich ist.

Es bietet sich an, einen Netzknoten vorzusehen, der den Betriebszustand der Batterie überwacht und Störungen im Stromkreis der Batterie erfaßt. Als Batterie eignet sich beispielsweise eine Hintereinanderschaltung mehrere Akkumulatoren.
Es kann eine elektronische Baugruppe vorgesehen sein, die im Falle einer Netzstörung eine Ausgabe von mindestens einer akustischen und/oder optischen Störungsmeldung bewirkt.

Zur Energieeinsparung ist es sinnvoll, daß mit Hilfe eines Netzknotens in Dauerlichtschaltung betriebene Leuchten der Sicherheitsbeleuchtungsanlage zeitabhängig oder in Abhängigkeit von der Stärke des einfallenden Tageslichts automatisch ein- und abgeschaltet werden.

Es ist möglich, daß mindestens eine Baugruppe einen Lüfter zur Belüftung der Batterie während und/oder nach einem Ladevorgang einschaltet. Während eines Ladevorganges entsteht explosives Wasserstoffgas, welches vorteilhafterweise mit Hilfe eines Lüfters fortgeblasen wird.

Es ist möglich, daß Leuchten der Sicherheitsbeleuchtungsanlage nur zu bestimmten Zeiten, in denen eine Notbeleuchtung überhaupt sinnvoll ist, (im Falle einer Netzstörung) auf eine Batterieversorgung umschaltbar sind, beispielsweise eine Zeitlang nach der Betätigung eines Treppenhauslichtschalters oder nach der Betätigung eines Lichtschalters für die allgemeine Raumbeleuchtung oder nur während der Einschaltzeit einer Raumbeleuchtung.

Es kann auch an mindestens einen Netzknoten ein Bewegungsmelder geschaltet sein, der dafür sorgt, daß nur bei einem Ansprechen des Bewegungsmelders die Leuchten der Sicherheitsbeleuchtungsanlage bei einer Netzstörung auf eine Batterieversorgung umschaltbar sind.

Dann werden die Leuchten - im Falle einer Netzstörung - nur dann auf die Batterieversorgung umgeschaltet, wenn eine Person in dem betreffenden Gebäude ist.

Schließlich ist es möglich, daß an mindestens eine Baugruppe der Sicherheitsbeleuchtungsanlage ein Außen- oder ein Innenlichtsensor geschaltet ist und daß nur bei Unterschreiten eines vorbestimmten Wertes für die von dem Sensor erfaßte Lichtstärke Leuchten der Sicherheitsbeleuchtungsanlage bei einer Netzstörung auf eine Versorgung über die Batterie umschaltbar sind.

Es ist möglich, daß durch mindestens eine Baugruppe eine Isolationsüberwachung zwischen Masse und Plus- und Minsupol in dem Verbrauchernetz der Sicherheitsbeleuchtung automatisch durchgeführt wird.

Mit Hilfe eines Personal Computers, der an das Netz angeschlossen ist und einen eigenen Netzknoten bildet, können besonders einfach (über ein laufendes Programm) Eingaben vorgenommen und aus einer Überwachung hervorgehende Werte angezeigt werden. Mit Hilfe der Visualisierung lassen sich zum schnelleren Auffinden etwaige Störungen und ausgefallene Leuchten räumlich darstellen, beispielsweise auf einem eingeblendeten Grundriß.

Bei einer vorteilhaften Ausführungsform weist die Schaltungsanordnung zum einen einen Ladegleichrichter auf, der für die Aufladung und die Ladungserhaltung der Batterie sorgt, und zum andern einen Netzknoten, der den Ladegleichrichter steuert und/oder überwacht. Die Überwachung und Steuerung des Ladegleichrichters bezieht sich beispielsweise auf die richtige Einstellung der Ladeerhaltungsspannung und des zugehörigen Stromes oder der Ladespannung und des Ladestromes im Anschluß an einen Netzausfall.

Die einzelnen Funktionen der Sicherheitsbeleuchtungsanlage lassen sich durch einzelne Netzknoten realisieren, dabei ist es auch möglich, daß in einem Netzknoten mehrere Funktionen realisiert sind. Es ist damit eine stufenweise Erweiterung des Netzes um zusätzliche Funktionen besonders einfach möglich.
Selbstverständlich können auch mehrere Funktionen in einem einzigen Netzknoten vereint werden.

Durch eine Aufteilung der Sicherheitsbeleuchtungsanlage in Teilsysteme ist es möglich, nur einen Teil der Leuchten der Sicherheitsbeleuchtungsanlage einzuschalten. Dies ist beispielsweise dann sinnvoll, wenn nur in einem Teil eines Gebäudes eine Netzstörung (beispielsweise durch einen Kurzschluß) aufgetreten ist. Die unabhängig voneinander arbeitenden Teilsysteme mit ihren Leuchten können bei einer Netzstörung entweder von einer Zentralbatterieanlage oder von einer eigenen (dezentral arbeitenden) Überwachungsbaugruppe auf Batteriebetrieb umgeschaltet werden. Durch mindestens eine Baugruppe kann die Spannung an mit der Batterie verbundenen Teilsystemen erfaßt und bei Unterschreiten eines Grenzwertes in mindestens einem Teilsystem auf eine Batterieversorgung (der Leuchten dieses Teilsystems) geschaltet werden. Die Teilsysteme können beispielsweise einzeln in den Etagen eines Gebäudes untergebracht werden.

Die Sicherheitsbeleuchtung läßt sich dann gezielt in denjenigen Etagen (unabhängig von den anderen Etagen) einschalten, in denen eine Netzstörung aufgetreten ist.

Günstig ist eine automatische Überprüfung der Leuchten der Sicherheitsbeleuchtungseinrichtung mittels mindestens eines Netzknotens. In einem solchen Fall muß kein umständlicher Kontrollgang von Überwachungspersonal vorgenommen werden. Selbst eine tägliche Überprüfung ist somit einfach durchzuführen.
Zusätzlich ist möglich, daß eine Baugruppe, die beispielsweise einen eigenen Netzknoten bildet, Ergebnisse der Überprüfung speichert.

Von Vorteil ist eine Schnelladung der Batterie im Anschluß an eine Netzstörung. Dazu wird die Batterie zunächst unmittelbar nach Netzwiederkehr mit erhöhter Ladespannung aufgeladen. Nach Erreichen eines voreingestellten Wertes für die Batteriespannung oder nach Ablauf einer voreingestellten Ladezeit wird eine niedrigere Spannung für eine Ladeerhaltung eingestellt. Die Schnelladung kann durch einen eigenen Netzknoten gesteuert werden.

Vorteilhaft ist eine Ausführungsform, bei der durch einen Netzknoten die Entladespannung der Batterie überwacht wird und bei Unterschreiten eines vorgegebenen Wertes ein Abschalten der an die Batterie angeschlossenen Leuchten hervorgerufen wird. Ein derartiger Tiefentladeschutz bietet den Vorteil, daß die Leuchten (zur Schonung der Batterie) ausgeschaltet werden, wenn beispielsweise ein Wert von 1,7 V/Zelle bei einer Bleibatterie und ein Wert von 0,96 V/Zelle bei einer Nickel-Cadmium-Batterie unterschritten wird. Eine derartige Batterie ist aus mehreren Zellen zusammengesetzt.

Günstig ist eine Ausführungsform, bei der mindestens ein Netzknoten die Spannung an mit dem Netz verbundenen Verbrauchern erfaßt. Bei Unterschreiten eines Grenzwertes spricht eine Umschalteinrichtung an, die eine elektrische Verbindung zwischen der Batterie und den an die Umschalteinrichtung angeschlossenen Leuchten der Sicherheitsbeleuchtungsanlage bewirkt. Auf diese Weise werden bei einem Kurzschluß einem Verbraucher die Leuchten an die Batterieversorgung gelegt.

Mindestens ein Netzknoten kann eine Schnittstelle der Gebäudeleittechnik sein; hierbei kann es sich um eine RS232-Schnittstelle oder eine V24-Schnittstelle handeln. Außerdem kann die Schnittstelle durch potentialfreie Kontakte gebildet sein.

Es ist möglich, daß bei ungestörtem Netz die angeschlossenen Verbraucher nur von einer einzigen Netzphase des Versorgungsnetzes versorgt werden, daß mindestens eine Baugruppe alle Netzphasen auf eine Netzstörung überprüft und im Falle einer Netzstörung in einer oder in zwei Netzphasen die Versorgung der Schaltungsanordnung auf eine nicht gestörte Netzphase umgeschaltet wird.

Im folgenden wird ein Ausführungsbeispiel der Erfindung anhand dreier Zeichnungen, aus denen sich weitere Einzelheiten und Vorteile ergeben, näher beschrieben.
Es zeigen:
- Fig. 1: ein Prinzipschaltbild für eine zentrale Überwachungsbaugruppe einer Sicherheitsbeleuchtungsanlage,
- Fig. 2: eine Sicherheitsbeleuchtungsanlage mit drei Teilsystemen und
- Fig. 3: eine Sicherheitsbeleuchtungsanlage mit zwei Unterverteilungen und mehreren Kommunikationsbaugruppen.

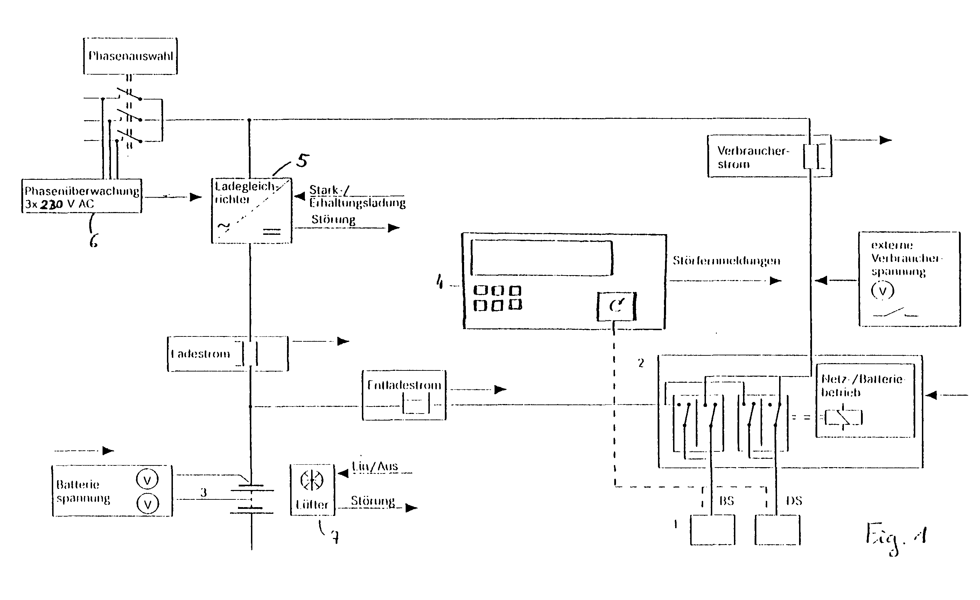

Eine Sicherheitsbeleuchtungsanlage nach Fig. 1 weist Netzknoten (1) mit daran angeschlossenen Leuchten in Bereitschaftsschaltung (BS) und in Dauerschaltung (DS) auf.
Die Leuchten in Bereitschaftsschaltung (BS) sind nur dann eingeschaltet, wenn die Netzversorgung gestört ist, während die anderen Leuchten auch bei vorhandener Netzversorgung Licht abgeben.
Die Netzknoten (1) sind elektronische Baugruppen mit eigener Intelligenz. Sie übernehmen insbesondere die Überwachung der angeschlossenen Leuchten und der Spannungen. Dazu sind sie mit einem Chip ausgerüstet, der einen Mikroprozessor enthält und einen Knoten eines Local Operating Network (LON) bildet. Den Netzknoten (1) ist eine Umschalteinrichtung (2) mit Netzvorrangschaltung vorgeschaltet. Die Umschalteinrichtung (2) ermöglicht, gesteuert von den Netzknoten (1), den Wechsel zwischen Netz- und Batteriebetrieb der Leuchten zu Beginn und am Ende einer Netzstörung.

Eine aufladbare Batterie (3) - als Zentralbatterie der Sicherheitsbeleuchtungsanlage - weist mehrere in Reihe geschaltete Zellen auf, die zusammen eine Spannung von ca. 230 V zur Verfügung stellen. Die Batteriespannung und der Batterieladekreis werden über ein Steuersystem (4) überwacht, das ähnlich wie die Netzknoten (1) einen Chip (C) enthält, der einen weiteren Knoten des LONs darstellt. Die Überwachungs- und Steuerungsfunktionen der gesamten Sicherheitsbeleuchtungsanlage werden über dieses mit Eingabetasten und einer Anzeige ausgestattete Steuersystem (4) programmiert. An das Steuersystem (4) ist ein Modem angeschlossen, so daß (ausgewählte) Störungsmeldungen über das Telefonnetz an eine Überwachungsstation in der Ferne übermittelt werden können (Störfernmeldungen).
Eine Netzstörung, die das Einschalten der Leuchten der Sicherheitsbeleuchtungsanlage hervorruft, liegt zum einen vor, wenn die Netzversorgung ausfällt, und zum andern, wenn die Verbraucherspannung sinkt, beispielsweise infolge eines Kurzschlusses im Verbraucher.
Über das Steuersystem (4) wird daher die Verbraucherspannung überwacht. Zusätzlich wird der Verbraucherstrom gemessen.

Ein Ladegleichrichter (5) versorgt die Zentralbatterie.

Dazu wird der Zentralbatterie bei ungestörtem Netz eine geringe Ladespannung (beispielsweise 2,23 V/Zelle bei Bleibatterien und 1,40 V/Zelle bei Nickel-Cadmium-Batterien) zugeführt. Nach Beendigung einer Netzstörung wird zur raschen Aufladung der mehr oder weniger stark entleerten Zentralbatterie auf Starkladung umgeschaltet (beispielsweise 2,4 V/Zelle bei Bleibatterien und 1,55 V/Zelle bei Nickel-Cadmium-Batterien). Eine Störung des Ladegleichrichters (5) und die Stärke des Ladestroms werden dem Steuersystem (4) übermittelt.

Die Zentralbatterie ist mit der Umschalteinrichtung (2) verbunden. In der Verbindungsleitung wird von dem Steuersystem (4) im Falle einer Netzstörung der Entladestrom erfaßt und überwacht.
Bei einer Netzstörung werden bei Erreichen eines Wertes von 0,96 V/Zelle bei einer aus NiCd-Zellen bestehenden Zentralbatterie bzw. eines Wertes von 1,7 V/Zelle bei einer aus Pb-Batterien bestehenden Zentralbatterie die Leuchten abgeschaltet (Tiefentladeschutz).
Nach Netzwiederkehr werden stets die in Dauerschaltung (DS) betriebenen Leuchten auf Netzbetrieb umgeschaltet und die in Bereitschaftsschaltung (BS) arbeitenden Leuchten abgeschaltet. Dabei beginnt die Starkladung der Zentralbatterie.

Eine Schaltung (6) für eine Phasenüberwachung überprüft die Netzspannung in den drei Phasen, und mit Hilfe eines Umschalters für eine Phasenauswahl wird im Falle einer Störung - soweit möglich - eine Verbindung der Sicherheitsbeleuchtungsanlage zu derjenigen Phase des Netzes hergestellt, bei der eine ungestörte Netzspannung anliegt. Über Kabel wird die Wechselspannung der Phase sowohl an den Ladegleichrichter (5) geführt als auch - über die Umschalteinrichtung (2) - an die in Dauerschaltung (DS) betriebenen Leuchten.

Ein Lüfter (7) bläst während der Dauer einer Starkladung bis zum Ablauf von einer Stunde danach über die Zellen der Zentralbatterie, damit sich kein explosives Gemisch aus Wasserstoff und Sauerstoff bilden kann. Eine Störung des Lüfters (7) wird dem Steuersystem (4) gemeldet.

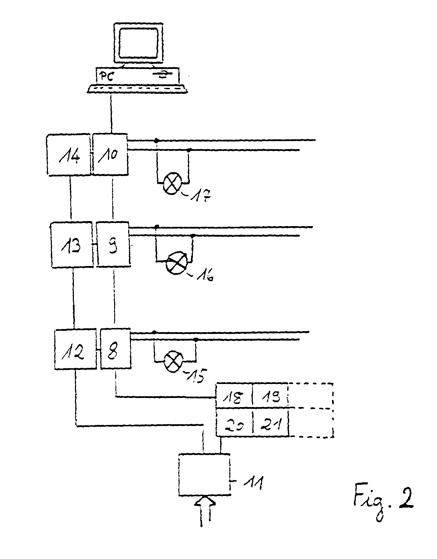

Fig. 2 veranschaulicht die wesentlichen Elemente einer Sicherheitsbeleuchtungsanlage mit drei Teilsystemen mit jeweils einer elektronischen Umschalteinrichtung (8, 9, 10). Die Umschalteinrichtungen (8, 9, 10) bilden Netzknoten des LON.

Für jedes Stockwerk eines Gebäudes ist jeweils ein Teilsystem vorgesehen. Die zugehörigen Umschalteinrichtungen (8, 9, 10) übernehmen auf dem ihnen zugeordneten Stockwerk die Überwachung und Steuerung von Leuchten (15, 16, 17) der Sicherheitsbeleuchtungsanlage. Im Keller befindet sich eine Gebäudeeinspeisung (11) für die Netzspannung, welche über einen Gleichrichter an eine Zentralbatterie geführt ist (wie in Fig. 1 dargestellt). Von der Gebäudeeinspeisung (11) führt ein Kabelstrang in die einzelnen Stockwerke, in denen jeweils eine Abzweigung (12, 13, 14) für die Versorgung der angeschlossenen Verbraucher vorhanden ist.

An die Umschalteinrichtungen (8, 9, 10) sind Leuchten (15, 16, 17) der Sicherheitsbeleuchtung angeschlossen, die bei Störung der Netzversorgung von der Zentralbatterie versorgt werden und damit eine Notbeleuchtung sicherstellen. Es können an jede Umschalteinrichtung (8, 9, 10) mehrere Leuchten (15, 16, 17) angeschlossen sein.

Die Umschalteinrichtungen (8, 9, 10) ermöglichen - im Falle einer Netzstörung - einen Wechsel auf Batteriebetrieb. Ferner enthalten sie Einrichtungen zur automatischen Überprüfung der angeschlossenen Leuchten (15, 16, 17) der Sicherheitsbeleuchtungsanlage auf Funktionstüchtigkeit. Wenn die Netzversorgung nur in einem einzigen Stockwerk gestört ist, beispielsweise durch einen Kurzschluß, wird auch nur in dem betreffenden Stockwerk durch die zugehörige Umschalteinrichtung (8, 9, 10) auf Batteriebetrieb umgeschaltet. Jedem Stockwerk ist also ein Teilsystem der Sicherheitsbeleuchtungsanlage zugewiesen. An die Umschalteinrichtung (10) im obersten Stockwerk ist zusätzlich ein Personal Computer (PC) angeschlossen, der einen eigenen Netzknoten des LON bildet. Das LON erlaubt den Anschluß des Personal Computers (PC) an einen beliebigen Netzknoten.

Im Keller sind in der Nähe der Gebäudeeinspeisung (11) in einem Schaltschrank verschiedene elektronische Baugruppen (18, 19, 20, 21) als Netzknoten des LON verknüpft. Die Baueinheiten (18, 19, 20, 21) dienen der Bedienung, der Überwachung, der Anzeige und dem Speichern der Ergebnisse der Überwachung. Dabei ist jeder Baugruppe (18, 19, 20, 21), und damit jedem Netzknoten, eine dieser Funktionen zugeordnet. Weitere Funktionen lassen sich durch beliebig viele an das LON anschließbare zusätzliche Baugruppen realisieren. Nicht dargestellt ist ein Anzeigemodul, das im Erdgeschoß in einem Pförtnerraum als eigene Baugruppe angebracht ist und die Betriebszustände "Störung", "Batteriebetrieb" und "Netzbetrieb" anzeigt.
So kann jederzeit zentral beobachtet werden, ob in der Sicherheitsbeleuchtungsanlage eine Störung aufgetreten ist, ob Leuchten gerade von der Zentralbatterie gespeist werden oder ob ein ungestörter Netzbetrieb vorliegt.

Eine umfassende Anzeige der Betriebszustände ist am angeschlossenen Personal Computer (PC) möglich, in dem ein Programm läuft, mit dem auch Parameter der Sicherheitsbeleuchtungsanlage (im Sinne einer Bedienung) verstellt werden können.

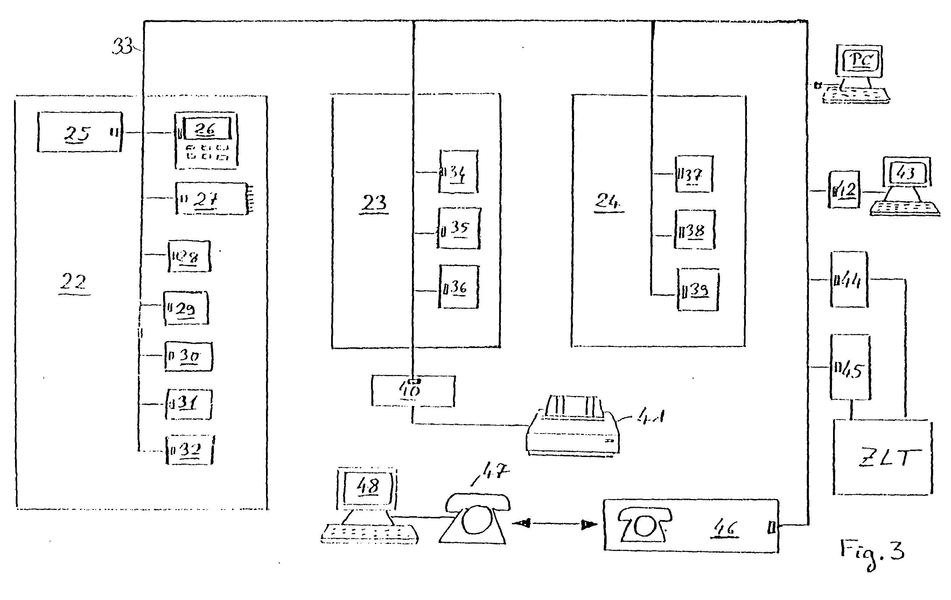

In Fig. 3 ist eine Zentralbatterieanlage (22) zu sehen, mit der zwei Unterverteilungen (23, 24) zu einem LON verbunden sind.

Die Zentralbatterieanlage (22) weist als einen Netzknoten eine zentrale Überwachungseinheit (25) für einen zentralen Schaltschrank und die Leuchten der Sicherheitsbeleuchtung auf.
Die Zentralbatterieanlage (22) wird über eine komfortable, einen weiteren Netzknoten bildende Bedieneinheit (26) programmiert. Die Programmierung betrifft beispielsweise die Auswahl der Größen und der Grenzwerte, die mit der Sicherheitsbeleuchtungsanlage überwacht werden sollen. Eine Druckerschnittstelle (27) der Zentralbatterieanlage (22) ermöglicht den Anschluß eines Druckers für die Ausgabe von Überwachungsergebnissen. Zusätzlich sind in der Zentralbatterieanlage (22) fünf Satellitenstationen (28, 29, 30, 31, 32) untergebracht, die fünf weitere Netzknoten bilden. Alle Netzknoten sind an ein gemeinsames Bus-System (33) angeschlossen.

Mit diesem Bus-System sind ferner insgesamt sechs weitere Überwachungsbaugruppen (34, 35, 36, 37, 38, 39) verbunden, die gleichmäßig auf die beiden Unterverteilungen (23, 24) aufgeteilt sind.
An der Unterverteilung (23) ist ein Netzknoten mit einer Druckerschnittstelle (40) angebracht, an der ein Drucker (41) angeschlossen ist. An dem Bus-System (33) befindet sich zusätzlich ein Netzknoten mit einem damit verbundenen Personal Computer (PC). Es handelt sich um einen Arbeitsplatz für die Anzeige von Überwachungsergebnissen und die Bedienung der Sicherheitsbeleuchtungsanlage.

Ferner ist an dem Bus-System (33) eine PC-Schnittstelle (42) vorhanden, an der ein weiterer Personal Computer (43) angeschlossen ist, der für die Verbindung zur Gebäudeleittechnik (Klima, Lüftung, Sanitäranlagen) eingesetzt wird. Auch diese PC-Schnittstelle (42) bildet einen eigenen Netzknoten.

Ferner gibt es an dem Bus-System (33) eine RS232-Schnittstelle (44) und eine Schnittstelle (45) mit potentialfreien Kontakten. An beide Schnittstellen (44, 45) ist gemeinsam eine zentrale Steuerungseinheit (ZLT) für die Gebäudeleittechnik angeschlossen.
Schließlich weist das Bus-System (33) ein Modem (46) auf, mit Hilfe dessen Daten über das Telefonnetz und ein weiteres Modem (47) an einen daran angeschlossenen Personal Computer (48) übermittelt werden.

Alle genannten, an das Bus-System (33) angeschlossenen elektronischen Baugruppen weisen einen Neuron-Chip auf, der in der Fig. 3 jeweils als ein kleines, unmittelbar mit dem Bus-System (33) verbundenes Rechteck dargestellt ist, und bilden damit Netzknoten des LONs.

## Patentansprüche

1. Schaltungsanordnung zum programmgesteuerten Überwachen und/oder Steuern einer Sicherheitsbeleuchtungsanlage mit einer einen Mikroprozessor enthaltenden Überwachungseinheit und mit einer bei einer Netzstörung die Spannungsversorgung für die Leuchten (15, 16, 17) der Sicherheitsbeleuchtungsanlage übernehmenden Batterie (3),
**dadurch gekennzeichnet,**
- daß die Schaltungsanordnung ein intelligentes Netz umfaßt, über das die Überwachung und Steuerung dezentral vorgenommen werden kann,
- daß die Überwachungseinheit mindestens zwei jeweils einen Mikroprozessor enthaltende elektronische Baugruppen als Netzknoten (1, 8-10, 18-21, 25, 26, 28-32, 34-40, 42, 44, 45) dieses Netzes enthält,
- daß dieses Netz durch weitere, jeweils einen Mikroprozessor enthaltende Netzknoten beliebig erweiterbar ist,
- ohne daß für die Erweiterung eine schaltungstechnische Anpassung der Netzknoten des bestehenden Netzes erforderlich ist
- und daß alle Netzknoten für einen Datenaustausch miteinander gekoppelt sind.

2. Schaltungsanordnung nach Anspruch 1,
dadurch gekennzeichnet,
daß die Schaltungsanordnung einen Ladegleichrichter (5) für die Aufladung und die Ladungserhaltung der Batterie (3) enthält und daß dieser Ladegleichrichter (5) von mindestens einem Netzknoten gesteuert und/oder überwacht wird.

3. Schaltungsanordnung nach Anspruch 1 oder 2,
dadurch gekennzeichnet,
daß jede Steuerungs- und Überwachungsfunktion jeweils durch einen Netzknoten (18, 19, 20, 21) realisiert ist.

4. Schaltungsanordnung nach einem der vorangehenden Ansprüche,
dadurch gekennzeichnet,
daß die Sicherheitsbeleuchtungsanlage in mehrere jeweils mindestens eine Leuchte aufweisende, unabhängig voneinander arbeitende Teilsysteme aufgeteilt ist und daß jedes Teilsystem durch jeweils mindestens einen Netzknoten gesteuert und überwacht wird.

5. Schaltungsanordnung nach einem der vorangehenden Ansprüche,
dadurch gekennzeichnet,
daß die Schaltungsanordnung mindestens einen Netzknoten enthält, der einer automatischen Überprüfung von Leuchten (15, 16, 17) für die Sicherheitsbeleuchtung auf ihre Funktionsfähigkeit dient.

6. Schaltungsanordnung nach einem der vorangehenden Ansprüche,
dadurch gekennzeichnet,
daß mindestens ein Netzknoten im Anschluß an eine Netzstörung nach Netzwiederkehr eine rasche Ladung der Batterie (3) mit erhöhter Ladespannung veranlaßt und daß nach Erreichen eines voreingestellten Wertes für die Batteriespannung oder nach Ablauf einer voreingestellten Ladezeit eine niedrigere Spannung für eine Ladeerhaltung eingestellt wird.

7. Schaltungsanordnung nach einem der vorangehenden Ansprüche,
dadurch gekennzeichnet,
daß mindestens ein Netzknoten im Falle einer Versorgung der Leuchten aus einer Batterie die Entladespannung der Batterie (3) überwacht und bei Unterschreiten eines vorgegebenen Wertes ein Abschalten der von der Batterie (3) versorgten Leuchten (1, 15, 16, 17) der Sicherheitsbeleuchtungsanlage bewirkt.

8. Schaltungsanordnung nach einem der vorangehenden Ansprüche,
dadurch gekennzeichnet,
daß mindestens ein Netzknoten die Spannung an mit dem Netz verbundenen Verbrauchern erfaßt und daß bei Unterschreiten eines Grenzwertes eine Umschalteinrichtung (2) anspricht, die eine elektrische Verbindung zwischen der Batterie (3) und den an die Umschalteinrichtung (2) angeschlossenen Leuchten der Sicherheitsbeleuchtungsanlage bewirkt.

9. Schaltungsanordnung nach einem der vorangehenden Ansprüche,
dadurch gekennzeichnet,
daß mindestens ein Netzknoten eine Schnittstelle der Gebäudeleittechnik ist.

10. Schaltungsanordnung nach einem der vorangehenden Ansprüche,
dadurch gekennzeichnet,
daß die Schaltungsanordnung und/oder die Leuchten (15, 16, 17) der Sicherheitsbeleuchtungsanlage bei ungestörtem Netz nur von einer einzigen Netzphase des Versorgungsnetzes versorgt werden, daß mindestens ein Netzknoten alle Netzphasen auf eine Netzstörung überprüft und im Falle einer Netzstörung in einer oder in zwei Netzphasen die Versorgung der Schaltungsanordnung auf eine nicht gestörte Netzphase umschaltet.

## Claims

1. Circuit for a program controlled monitoring and/or controlling of a safety lighting unit with a monitoring unit comprising a microprocessor and with a battery (3) taking over the power supply for the lamps (15, 16, 17) of the safety lighting unit in the case of disturbances in the supply network,
characterised in
- that the circuit comprises an intelligent network by means of which the monitoring and controlling can be carried out in a decentralized manner,
- that the circuit comprises at least two electronic subassemblies which are in each case provided with a microprocessor as nodal points (1, 8-10, 18-21, 25, 26, 28-32, 34-40, 42, 44, 45) of this network
- that this network can be extended at will by means of further nodal points each containing a microprocessor,
- that this enlargement is possible without requiring any technical circuit adaptations of the nodal points of the already existing network,
- and that all nodal points are coupled to one another for the purpose of data exchange.

2. Circuit as claimed in claim 1,
characterised in
that the circuit comprises a charging rectifier (5) for charging and maintaining the charge of the battery (3) and that this charging rectifier (3) is controlled and/or monitored by at least one nodal point.

3. Circuit as claimed in claim 1 or 2,
characterised in
that each control and monitoring function is realized in each case by a nodal point (18, 19, 20, 21).

4. Circuit as claimed in any one of the preceding claims,
characterised in
that the safety lighting unit is subdivided in several partial systems working independently of one another and comprising in each case at least one lamp, and that each partial system is controlled and monitored by at least one nodal point.

5. Circuit as claimed in any one of the preceding claims,
characterised in
that the circuit contains at least one nodal point serving the purpose of automatically checking lamps (15, 16, 17) for the safety lighting as regards their operativeness.

6. Circuit as claimed in any one of the preceding claims,
characterised in
that at least one nodal point arranges for a quick charging of the battery (3) with an increased charging voltage subsequently to disturbances in the supply network when this network has been recovered and that after reaching a predetermined value for the voltage of the battery or after the expiration of a predetermined charging period a lower voltage for maintaining the charge is adjusted.

7. Circuit as claimed in any one of the preceding claims,
characterised in
that at least one nodal point monitors the discharge voltage of the battery (3) in the case of a supply of the lamps by means of a battery and switches off the lamps (1, 15, 16, 17) of the safety lighting unit which are supplied by the battery when the voltage falls below a predetermined value.

8. Circuit as claimed in any one of the preceding claims,
characterised in
that at least one nodal point detects the voltage at consumers connected to the supply network and that a switch over device (2) is activated when the value falls below a limiting value, said switch over device effects an electrical connection between the battery (3) and the lamps of the safety lighting plant connected to the switch over device (2).

9. Circuit as claimed in any one of the preceding claims,
characterised in
that at least one nodal point is an interface of the process control technique of the building.

10. Circuit as claimed in any one of the preceding claims,
characterised in
that the circuit and/or the lamps (15, 16, 17) of the safety lighting unit are supplied in the case of an undisturbed supply network by only one net phase of the supply network, that at least one nodal point controls all net phases as regards disturbances in the supply network and, in the case of disturbances in one or two net phases, switches over the circuit to an undisturbed net phase.

## Revendications

1. Montage pour le contrôle et/ou la commande commandé par programme d'une installation d'éclairage de sécurité comportant une unité de contrôle contenant un microprocesseur, et une batterie (3) qui, dans le cas d'une perturbation du réseau, assure l'alimentation en tension des lampes (15, 16, 17) de l'installation d'éclairage de sécurité,
caractérisé en ce que
- le montage comprend un réseau intelligent, au moyen duquel le contrôle et la commande peuvent être exécutés d'une manière décentralisée,
- que l'unité de contrôle comporte au moins deux modules électroniques contenant chacun un microprocesseur, en tant que noeuds du réseau (1, 8-10, 18-21, 25, 26, 28-32, 34-40, 42, 44, 45) de ce réseau,
- que ce réseau peut être étendu à volonté au moyen d'autres noeuds du réseau contenant chacun un microprocesseur,
- sans que pour l'extension il soit nécessaire d'exécuter une adaptation des noeuds du réseau existant, du point de vue de la technique des circuits, et
- que tous les noeuds du réseau sont couplés entre eux pour un échange de données.

2. Montage selon la revendication 1, caractérisé en ce
que le montage contient un redresseur de charge (5) pour l'opération de charge et la conservation de la charge de la batterie (3) et que ce redresseur de charge (5) est commandé et/ou contrôlé par au moins un noeud du réseau.

3. Montage selon la revendication 1 ou 2, caractérisé en ce
que chaque fonction de commande et de contrôle est réalisée respectivement par un noeud (18, 19, 20, 21) du réseau.

4. Montage selon l'une des revendications précédentes, caractérisé en ce
que l'installation d'éclairage de sécurité est divisée en plusieurs systèmes partiels, qui comportent chacun au moins une lampe et travaillent indépendamment les uns des autres et que chaque système partiel est commandé et contrôlé par respectivement au moins un noeud du réseau.

5. Montage selon l'une des revendications précédentes, caractérisé en ce
que le montage contient au moins un noeud du réseau, qui est utilisé pour réaliser le contrôle automatique de l'aptitude au fonctionnement de lampes (15, 16, 17) pour l'éclairage de sécurité.

6. Montage selon l'une des revendications précédentes, caractérisé en ce
qu'à la suite d'une perturbation du réseau, au moins un noeud du réseau déclenche, après rétablissement du réseau, une charge rapide de la batterie (3) avec une tension de charge accrue et qu'une fois atteinte une valeur préréglée pour la tension de la batterie ou après l'écoulement d'une durée de charge préréglée, une tension plus basse est réglée pour la conservation de la charge.

7. Montage selon l'une des revendications précédentes, caractérisé en ce
que dans le cas d'une alimentation des lampes à partir d'une batterie, au moins un noeud du réseau contrôle la tension de décharge de la batterie (3) et, lorsque cette tension tombe au-dessous d'une valeur prédéterminée, déclenche un débranchement des lampes (1, 15, 16, 17), alimentées par la batterie (3), de l'installation d'éclairage de sécurité.

8. Montage selon l'une des revendications précédentes, caractérisé en ce
qu'au moins un noeud du réseau détecte la tension aux bornes d'appareils d'utilisation reliés au réseau et que, lorsque la tension tombe au-dessous d'une valeur limite, un dispositif de commutation (2) répond, ce dispositif établissant une liaison électrique entre la batterie (3) et les lampes, qui sont raccordées au dispositif de commutation (2), de l'installation d'éclairement de sécurité.

9. Montage selon l'une des revendications précédentes, caractérisé en ce
qu'au moins un noeud du réseau est une interface de la technique d'automatique industrielle de bâtiments.

10. Montage selon l'une des revendications précédentes, caractérisé en ce
que le montage et/ou les lampes (15, 16, 17) de l'installation d'éclairement de sécurité sont alimentés, lorsque le réseau n'est pas perturbé, uniquement par une seule phase du réseau d'alimentation, qu'au moins un noeud du réseau contrôle toutes les phases du réseau pour déterminer s'il existe une perturbation du réseau et que dans le cas d'une perturbation du réseau dans une ou dans deux phases du réseau, l'alimentation du montage est commutée sur une phase non perturbée du réseau.
